Europäisches Patentamt

European Patent Office

Office européen des brevets

(11) Publication number: **0 322 168**
**A2**

## (12) EUROPEAN PATENT APPLICATION

(21) Application number: 88311998.4

(22) Date of filing: 19.12.88

(51) Int. Cl.4: **B29C 61/06** , **C09J 7/02** , **H02G 15/18**

(30) Priority: 19.12.87 GB 8729680

(43) Date of publication of application:
28.06.89 Bulletin 89/26

(84) Designated Contracting States:
AT BE CH DE ES FR GB GR IT LI LU NL SE

(71) Applicant: BOWTHORPE-HELLERMANN
LIMITED
Gatwick Road
Crawley West Sussex RH10 2RZ(GB)

(72) Inventor: Lee, Peter Ian
The Beeches Callington Road
Tavistock Devon PL19 8EJ(GB)
Inventor: Neely, Nicholas
14, Drake Road
Bovey Tracey Devon(GB)

(74) Representative: Austin, Hedley William et al
Urquhart-Dykes & Lord Alexandra House 1
Alexandra Road
Swansea West Glamorgan SA1 5ED(GB)

(54) Heat shrinkable articles.

(57) The heat shrinkable article (such as a closure for enclosing joints in electrical or optical cables) has at least one surface at least partly coated with a hot melt adhesive (such as an acrylic urethane copolymer adhesive) which is thermally softenable over a first range of temperatures and is thermosetting over a second range of temperatures higher than the first range.

EP 0 322 168 A2

## Heat Shrinkable Articles

The present invention relates to heat shrinkable articles, such as heat shrinkable closures, tubing, sleeves, sheet material or tape.

It is known that hollow heat shrinkable plastics articles of any desired shape can be coated on their inner surfaces with an adhesive material, and also that heat shrinkable plastics tape can be coated on one or both faces with an adhesive material. When such articles are hollow, they may be, for example, sleeves for enclosing joints in electrical, telecommunications or optical cables, the sleeves being coated with the adhesive at least adjacent the ends thereof.

When such heat shrinkable articles are applied to cables or the like, the adhesive coating improves the adhesion of the article to the cable and ensures that the gap between the article and the cable is sealed in a moisture-impermeable manner. Examples of suitable adhesive coatings are hot melt adhesives, which are such that they can be activated on application of heat sufficient to melt the article being shrunk.

We have now devised heat shrinkable articles with adhesive coatings which provide enhanced performance.

According to the present invention, therefore, there is provided a heat shrinkable article which has at least one surface coated over at least part thereof with a hot melt adhesive which is thermally softenable over a first range of temperatures and thermosetting over a second range of temperatures higher than said first range.

Preferably, the lower end of the second range of temperatures is at least 20°C higher than the upper end of the first range of temperatures; by way of example, the upper end of the first range may be not more than 120°C (typically not more than 100°C) and the lower end of the second range may be not less than 150°C.

It is further preferred that the lower end of the first range should be not less than 60°C, while the upper end of the second range is preferably not more than 200°C (more preferably not more than 170°C).

The hot melt adhesive used according to the invention is preferably an acrylic copolymer adhesive; the copolymer is typically produced by reacting a polymer of a hydroxyalkyl acrylate or methacrylate with a polyisocyanate. The hydroxyalkyl acrylate or methacrylate may be a homopolymer or copolymer of a monomer such as hydroxyethyl acrylate or methacrylate. The polyisocyanate may be any of those known in the art, such as toluene diisocyanate, meta-phenylene diisocyanate or the like.

Alternatively, the copolymer may be formed by reacting an isocyanate terminated polyurethane prepolymer with a hydroxyalkyl acrylate or methacrylate.

An example of a suitable acrylic urethane copolymer for use according to the invention is commercially available under the trade mark "Xenocryl" from Caswell & Co. of Northampton, England.

The acrylic urethane copolymer used according to the present invention is typically one which melts between 60 and 100°C and cures between 150 and 200°C.

The hot melt adhesive may be applied to the heat shrinkable article by any suitable method such as, for example, by application from a solution or melt of the polymer; the latter should, of course, be applied at a temperature less than the lower end of the second range of temperatures in order to avoid premature curing of the adhesive layer. The adhesive may be applied by extrusion, spraying, dipping or the like, and is preferably applied as a substantially continuous layer on the heat shrinkable article.

The adhesive coating may incorporate inert components, such as plasticisers, further polymers, reinforcing fillers (such as powders or fibres), tackifiers or the like. It may sometimes be desirable to incorporate finely divided conductive fillers in the adhesive coating.

The article according to the invention may be in the form of an open-ended hollow article (or tubing) suitable for enclosing a cable joint, although it may be a closed-ended body suitable for cable termination. Such bodies are often called end-caps, boots, transitions, or udders, depending on the number of outlets. For bodies of the type described above, it is preferred that the hot melt adhesive should be applied over the inner surface thereof, such that it will adhere to the cable.

Alternatively, the article according to the invention may be in the form of a tape, sheet or the like, with the adhesive applied over at least part of one or both surfaces thereof. Such tape or sheet may be wrapped around cable or the like with the adhesive coating in contact with the cable.

In use of an article according to the invention, a junction or termination of a cable may be surrounded by the article, with the coating in contact with the junction or termination. Heat may then be applied to cause the article to shrink or recover and the adhesive to melt or thermally soften so as to adhere the particle to the junction or termination, and thereby provide a good seal between the article and the cable or cables. Then further heat is applied (without an intermediate cooling stage) so as to cause curing (thermosetting) of the hot melt adhesive.

## Claims

1. A heat shrinkable article which has at least one surface coated over at least part thereof with a hot melt adhesive which is thermally softenable over a first range of temperatures and is thermosetting over a second range of temperatures higher than said first range.

2. A heat shrinkable article according to claim 1, wherein the lower end of said second range of temperatures is at least 20°C higher than the upper end of the first range of temperatures.

3. A heat shrinkable article according to claim 1 or 2, wherein the upper end of the first range is not more than 120°C.

4. A heat shrinkable article according to any of claims 1 to 3, wherein the lower end of the second range is not less than 150°C.

5. A heat shrinkable article according to any of claims 1 to 4, wherein said hot melt adhesive comprises an acrylic urethane copolymer.

6. A heat shrinkable article according to claim 4, wherein said acrylic urethane copolymer is produced by reacting a polymer of a hydroxyalkyl acrylate or methacrylate with a polyisocyanate.

7. A heat shrinkable article according to any of claims 1 to 5, which is in the form of tubing suitable for enclosing cable joints.

8. A method of enclosing a junction or termination of a cable, which comprises surrounding said junction or termination with a heat shrinkable article according to any of claims 1 to 6, with said coating in contact with said junction or termination, thermally shrinking said article at a temperature such that said adhesive is thermally softened so as to cause said article to adhere to said junction or termination, and heating said article to a temperature in said second range so as to cause thermosetting of said adhesive.

9. A method according to claim 8, wherein there is no cooling stage between said thermal shrinking and said heating stage.

10. A cable junction or termination which has been enclosed by a method according to claim 8 or 9.